(19) Europäisches Patentamt
European Patent Office
Office européen des brevets

(11) EP 4 598 216 A1

(12) **EUROPEAN PATENT APPLICATION**
published in accordance with Art. 153(4) EPC

(43) Date of publication:
**06.08.2025 Bulletin 2025/32**

(21) Application number: **23873106.1**

(22) Date of filing: **26.09.2023**

(51) International Patent Classification (IPC):
***H04W 72/23*** *(2023.01)* ***H04W 72/04*** *(2023.01)*
***H04W 72/21*** *(2023.01)* ***H04W 72/12*** *(2023.01)*
***H04W 8/24*** *(2009.01)* ***H04L 5/00*** *(2006.01)*
***H04L 27/26*** *(2006.01)*

(52) Cooperative Patent Classification (CPC):
**H04L 5/00; H04L 27/26; H04W 8/24; H04W 72/04; H04W 72/12; H04W 72/21; H04W 72/23**

(86) International application number:
**PCT/KR2023/014819**

(87) International publication number:
**WO 2024/071992 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 KR 20220124767**
**04.11.2022 KR 20220146525**

(71) Applicant: **LG Electronics Inc.**
**Yeongdeungpo-gu**
**Seoul 07336 (KR)**

(72) Inventors:
- **CHOI, Seunghwan**
  **Seoul 06772 (KR)**
- **YANG, Suckchel**
  **Seoul 06772 (KR)**
- **KIM, Seonwook**
  **Seoul 06772 (KR)**

(74) Representative: **Plasseraud IP**
**104 Rue de Richelieu**
**CS92104**
**75080 Paris Cedex 02 (FR)**

# (54) METHOD AND DEVICE FOR TRANSMITTING/RECEIVING SIGNALS IN WIRELESS COMMUNICATION SYSTEM

(57) A method and a device for transmitting/receiving signals in a wireless communication system, disclosed in the present specification, allow uplink switching to be performed between three or more bands. Disclosed are methods for presenting the preparation or processing time of transmission performed after uplink switching, and the minimum time interval between uplink switchings.

【FIG. 5】

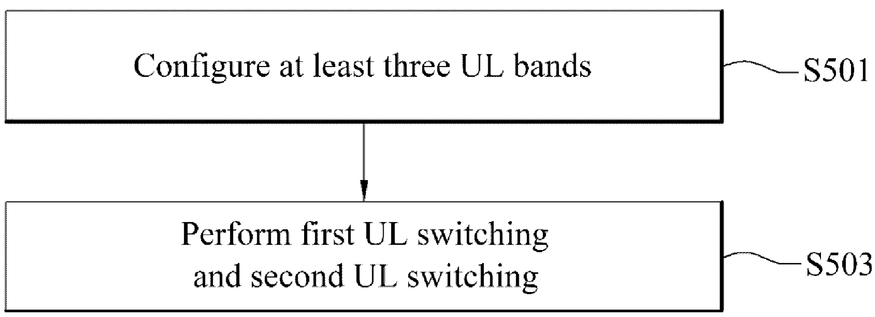




Processed by Luminess, 75001 PARIS (FR)

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

#### Technical Problem

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

#### Technical Solution

The present disclosure provides a method and apparatus for transmitting and receiving a signal in a wireless communication system.

According to an aspect of the present disclosure, a method of transmitting and receiving a signal by a user equipment (UE) in a wireless communication system includes configuring at least three uplink (UL) bands, and performing first UL switching and second UL switching, wherein the at least three UL bands are included in transmissions before the first UL switching, between the first UL switching and the second UL switching, or after the second UL switching, and a time interval between the first UL switching and the second UL switching is not configured to be smaller than a specific time interval.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when control and data signals are transmitted and received between communication devices, the signals may be transmitted and received more efficiently based on operations different from those in the prior art

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.

FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

## MODE FOR INVENTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT- s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |

(continued)

| SCS (15*2^u) | $N^{slot}_{symb}$ | $N^{frame,u}_{slot}$ | $N^{subframe,u}_{slot}$ |
|---|---|---|---|
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

<u>UL Physical Channels/Signals</u>

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 4]

| PUCCH format | Length in OFDM symbols $N_{symb}^{PUCCH}$ | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ. CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

(0) PUCCH Format 0 (PF0)

- Supportable UCI payload size: up to K bits (e.g., K = 2)
- Number of OFDM symbols included in one PUCCH: 1 to X symbols (e.g., X = 2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K = 2)
- Number of OFDM symbols included in one PUCCH: Y to Z symbols (e.g., Y = 4 and Z = 14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K = 2)
- Number of OFDM symbols included in one PUCCH: 1 to X symbols (e.g., X = 2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. The DFT is applied to encoded UCI bits with no multiplexing between UEs.

## Uplink switching with 3 or 4 uplink bands

The above contents are applicable in combination with methods proposed in the present disclosure, which will be described later. Alternatively, the contents may clarify the technical features of the methods proposed in the present disclo sure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Generally, due to a size of a UE, the number of antennas to be installed on the corresponding UE is limited. A UE with N transmission chains via N antennas may support up to N 1-port UL transmissions simultaneously or up to N-port UL transmissions. A method is required to support a UE with a limited transmission chain to perform UL transmission effectively. Hereinafter, implementations of this specification for UL transmission (Tx) switching are described. Most UEs developed to date support up to two Tx chains, and thus the implementations of this specification are described below assuming that the UE supports UL transmission through up to two Tx chains, i.e., up to two ports. However, implementations of this specification are not limited to 1-port or 2-port UL transmission, but may also be applied to N-port UL transmission, where N may be greater than 2.

FIG. 4 is a diagram illustrating a concept of UL transmission switching.

To increase the throughput and efficiency of UL transmission, NR Rel-16 provides UL Tx switching (UTS), which switches Tx chain(s) connected to UL carrier(s) under a certain condition, for the purpose of enabling a UE to effectively perform 1-port UL transmission or 2-port UL transmission by using up to two Tx chains. FIG. 4(a) illustrates 1Tx-2Tx switching between two carriers/bands, and FIG. 4(b) illustrates 2Tx-2Tx switching between two carriers/bands.

For example, if UL transmission (hereinafter, "previous transmission") is performed on carrier #1 with 1 Tx chain, and then UL transmission (hereinafter, "current transmission") is configured/instructed to be performed on another carrier #2 with 2 Tx chains, the UE may switch the Tx chain connected to carrier #1 to carrier #2 to enable 2-port UL transmission on carrier #2. These UTS configuration and switching method may be applied to band combinations corresponding to evolved-universal terrestrial radio access new-radio-dual connectivity (EN-DC) without supplementary UL (SUL), standalone SUL, and inter-band CA. In NR Rel-17, an additional condition is introduced to extend the 1Tx-2Tx switching (i.e., switching between 1 Tx chain and 2 Tx chain) of existing NR Rel-16 to 2Tx-2Tx switching (i.e., switching between 2 Tx chain and 2 Tx chain), and at the same time, UTS between two carriers introduced in NR Rel-16 is extended to allow UTS between two different bands (e.g., 1 carrier in one band and 2 contiguous carriers in another band).

When a certain condition is satisfied and the UE is configured with uplinkTxSwitching via RRC signaling, the UE may omit UL transmission during uplink switching gap NTx1-Tx2. For example, when certain conditions are satisfied and the UE is configured with uplinkTxSwitching via RRC signaling, the UE omits all UL transmission(s), including UL transmission scheduled via DCI and UL transmissions configured by higher layer signaling (e.g., configured grant-based PUSCH), during a UL switching gap $N_{Tx1-Tx2}$. The switching gap NTx1-Tx2 may be indicated by uplinkTxSwitchingPeriod2T2T provided from the UE to the BS via UE capability report when uplinkTxSwitching-2T-Mode is configured via RRC signaling, otherwise the switching gap NTx1-Tx2 may be indicated by uplinkTxSwitchingPeriod provided from the UE to the BS via UE capability report. Here, the RRC configuration uplinkTxSwitching may be provided to the UE as included in a configuration regarding a serving cell, and may include uplinkTxSwitchingPeriodLocation indicating whether a location of a UL Tx switching period is configured on the UL carrier in case of inter-band UL CA, SUL or (NG)EN-DC, and uplinkTxSwitchingCarrier indicating that the configured carrier is carrier 1 or carrier 2 for dynamic UL Tx switching. The RRC parameter uplinkTxSwitching-2T-Mode indicates that a 2Tx-2Tx switching mode is configured for inter-band UL CA or SUL, in which case a switching gap duration for triggered UL switching may be equal to a switching time capability value reported for the switching mode. When the RRC parameter uplinkTxSwitching-2T-Mode is not provided and uplinkTxSwitching is configured, it may be interpreted that 1Tx-2Tx UTS is configured, in which case there may be one UL (or one UL band in case of intra-band) configured with uplinkTxSwitching.

When the UE indicates the capability for UL switching for a band combination and configures the band combination to MCG using E-UTRA radio access and SCG using NR radio access, to UL CA, or to a serving cell with two UL carriers with higher layer (e.g. RRC) parameter supplementary Uplink, the switching gap may be present under certain conditions. For example, the following tables are taken from 3GPP TS 38.214 V17.1.0 and illustrate UTS conditions.

When UL switching is triggered for UL transmission starting at $T_0$, which is after $T_0$ - $T_{offset}$, the UE is not expected to cancel the UL switching, or to trigger any other new UL switching that occurs before $T_0$ for any other UL transmission

scheduled after $T_0$ - $T_{offset}$, where $T_{offset}$ may be a UE processing procedure time defined for UL transmission triggering switching (e.g. see S5.3, S5.4, S6.2.1 and S6.4 of 3GPP TS 38.214 and S9 of 3GPP TS 38.213). The UE is not expected to perform more than one UL switching in a slot with $u_{UL} = \max(u_{UL,1}, u_{UL,2})$, where $u_{UL,1}$ corresponds to a subcarrier spacing of an active UL BWP of one UL carrier before the switching gap and $u_{UL,2}$ corresponds to the subcarrier spacing of the active UL BWP of another UL carrier after the switching gap.

[Table 5]

### 6.1.6.1 Uplink switching for EN-DC

For a UE indicating a capability for uplink switching with *BandCombination-UplinkTxSwitch* for a band combination, and if it is for that band combination configured with a MCG using E-UTRA radio access and with a SCG using NR radio access (EN-DC), if the UE is configured with uplink switching with parameter *uplinkTxSwitching*,

- for the UE configured with *switchedUL* by the parameter *uplinkTxSwitchingOption*, when the UE is to transmit in the uplink based on DCI(s) received before $\boldsymbol{T_0 - T_{offset}}$ or based on a higher layer configuration(s):
  - when the UE is to transmit an NR uplink that takes place after an E-UTRA uplink on another uplink carrier then the UE is not expected to transmit for the duration of $N_{\text{Tx1-Tx2}}$ on any of the two carriers.
  - when the UE is to transmit an E-UTRA uplink that takes place after an NR uplink on another uplink carrier then the UE is not expected to transmit for the duration of $N_{\text{Tx1-Tx2}}$ on any of the two carriers.
  - the UE is not expected to transmit simultaneously on the NR uplink and the E-UTRA uplink. If the UE is scheduled or configured to transmit any NR uplink transmission overlapping with an E-UTRA uplink transmission, the NR uplink transmission is dropped,
- for the UE configured with *uplinkTxSwitchingOption* set to 'dualUL', when the UE is to transmit in the uplink based on DCI(s) received before $\boldsymbol{T_0 - T_{offset}}$ or based on a higher layer configuration(s):
  - when the UE is to transmit an NR two-port uplink that takes place after an E-UTRA uplink on another uplink carrier then the UE is not expected to transmit for the duration of $N_{\text{Tx1-Tx2}}$ on any of the two carriers.
  - when the UE is to transmit an E-UTRA uplink that takes place after an NR two-port uplink on another uplink carrier then the UE is not expected to transmit for the duration of $N_{\text{Tx1-Tx2}}$ on any of the two carriers.
  - the UE is not expected to transmit simultaneously a two- port transmission on the NR uplink and the E-UTRA uplink.
- in all other cases the UE is expected to transmit normally all uplink transmissions without interruptions.
- when the UE is configured with *tdm-PatternConfig* or by *tdm-PatternConfig2*
  - for the E-UTRA subframes designated as uplink by the configuration, the UE assumes the operation state in which one-port E-UTRA uplink can be transmitted.
  - for the E-UTRA subframes other than the ones designated as uplink by the configuration, the UE assumes the operation state in which two-port NR uplink can be transmitted.

[Table 6]

### 6.1.6.2 Uplink switching for carrier aggregation

For a UE indicating a capability for uplink switching with *BandCombination-UplinkTxSwitch* or *uplinkTxSwitchingPeriod2T2T* for a band combination, and if it is for that band combination configured with uplink carrier aggregation:

- If the UE is configured with uplink switching with parameter *uplinkTxSwitching*, when the UE is to transmit in the uplink based on DCI(s) received before $T_0 - T_{offset}$ or based on a higher layer configuration(s):
  - When the UE is to transmit a 2-port transmission on one uplink carrier on one band and if the preceding uplink transmission is a 1-port transmission on another uplink carrier on another band, then the UE is not expected to transmit for the duration of $N_{\text{Tx1-Tx2}}$ on any of the carriers.
  - When the UE is to transmit a 1-port transmission on one uplink carrier on one band and if the preceding uplink transmission is a 2-port transmission on another uplink carrier on another band, then the UE is not expected to transmit for the duration of $N_{\text{Tx1-Tx2}}$ on any of the carriers.
  - For the UE configured with *uplinkTxSwitchingOption* set to 'switchedUL', when the UE is to transmit a 1-port transmission on one uplink carrier on one band and if the preceding uplink transmission was a 1-port transmission on another uplink carrier on another band, then the UE is not expected to transmit for the duration of $N_{\text{Tx1-Tx2}}$ on any of the carriers.
  - For the UE configured with *uplinkTxSwitchingOption* set to 'dualUL', when the UE is to transmit a 2-port transmission on one uplink carrier on one band and if the preceding uplink transmission was a 1-port transmission on a carrier on the same band and the UE is under the operation state in which 2-port transmission cannot be supported in the same band, then the UE is not expected to transmit for the duration of $N_{\text{Tx1-Tx2}}$ on any of the carriers.
  - For the UE configured with *uplinkTxSwitchingOption* set to 'dualUL', when the UE is to transmit a 1-port transmission on one uplink carrier on one band and if the preceding uplink transmission was a 1-port transmission on another uplink carrier on another band and the UE is under the operation state in which 2-port transmission can be supported on the same uplink carrier, then the UE is not expected to transmit for the duration of $N_{\text{Tx1-Tx2}}$ on any of the carriers.
  - For the UE configured with *uplinkTxSwitchingOption* set to 'dualUL', if the UE is configured with *OneT* with *uplinkTxSwitching-DualUL-TxState*, when the UE is under the operation state in which 2-port transmission can be supported on one carrier on one band followed by no transmission on any carrier on the same band and 1-port transmission on the other carrier on another band the UE shall consider this as if 1-port transmission was transmitted on both uplinks, otherwise the UE shall consider this as if 2-port transmission took place on the transmitting carrier.
  - If *uplinkTxSwitching-2T-Mode* is configured, when the UE is to transmit a 2-port transmission on one uplink carrier on one band and if the preceding uplink transmission is a 2-port transmission on another uplink carrier on another band, then the UE is not expected to transmit for the duration of $N_{\text{Tx1-Tx2}}$ on any of the carriers.
  - The UE is not expected to be scheduled or configured with uplink transmissions that result in simultaneous transmission on two antenna ports on one uplink carrier on one band, and any transmission on another uplink carrier on another band.
- In all other cases the UE is expected to transmit normally all uplink transmissions without interruptions.

[Table 7]

### 6.1.6.3 Uplink switching for supplementary uplink

For a UE indicating a capability for uplink switching with *BandCombination-UplinkTxSwitch* for a band combination, and if it is for that band combination configured in a serving cell with two uplink carriers with higher layer parameter *supplementaryUplink*:

- If the UE is configured with uplink switching with parameter *uplinkTxSwitching*,
  - If the UE is to transmit any uplink channel or signal on a different uplink on a different band from the preceding transmission occasion based on DCI(s) received before $T_0 - T_{offset}$ or based on a higher layer configuration(s), then the UE assumes that an uplink switching is triggered in a duration of switching gap $N_{\text{Tx1-Tx2}}$, where $T_0$ is the start time of the first symbol of the transmission occasion of the uplink channel or signal and $T_{offset}$ is the preparation procedure time of the transmission occasion of the uplink channel or signal given in clause 5.3, clause 5.4, clause 6.2.1, clause 6.4 and in clause 9 of [6, TS 38.213], respectively. During the switching gap $N_{\text{Tx1-Tx2}}$, the UE is not expected to transmit on any of the two uplinks.
- In all other cases the UE is expected to transmit normally all uplink transmissions without interruptions.

NR supports a wide spectrum across various frequency ranges. The availability of a spectrum is expected to increase in a 5G advanced market due to repurposing of bands originally used in previous generation cellular networks. Especially for a low-frequency FR1 band, an available spectral block tends to be more fragmented and distributed over narrower bandwidths. For an FR2 band and some FR1 bands, a multicarrier operation within a band is required as an available spectrum is to be widened. To satisfy diverse spectrum requirements, it is important to provide higher throughput and adequate coverage in a network by using these distributed spectrum band or wider bandwidth spectrum in a more spectrum/power efficient and flexible manner. For a multicarrier UL operation, the current specification has several limitations. For example, a 2TX UE may be configured with up to two UL bands to be changed only by RRC reconfiguration, and UL Tx switching may only be performed between the two UL bands for the 2Tx UE. Instead of RRC-based cell(s) reconfiguration, dynamically selecting carriers with UL Tx switching based on, for example, data traffic, TDD DL/UL configuration, bandwidth and channel conditions of each band may potentially lead to a higher UL data rate, spectrum utilization, and UE capacity.

For a higher UL data rate, spectrum utilization, and UE capacity, UTS between more than two bands is currently considered. Hereinafter, UTS trigger condition(s), UTS-related configuration method(s), and/or UTS operation method(s) required to support UTS between multiple bands (e.g., three or more bands) according to some implementations of this specification are described.

Hereinafter, a cell may be interpreted according to context. For example, the cell may mean a serving cell. The cell may include one DL component carrier (CC) and 0 to 2 UL CCs, but implementations of this specification described below are not limited thereto. In the following, unless otherwise specified, the terms cell and CC may be used interchangeably. In some implementations of this specification, the cell/CC may be replaced with an (active) BWP within the serving cell. Unless otherwise specified, in the implementations of this specification described below, the cell/CC may be used as a concept encompassing PCell, SCell, PsCell, and the like, which may be configured/expressed in a carrier aggregation (CA)/dual connectivity (DC) scenario.

Hereinafter, the term "band" means a frequency band, and the term "band" may be used interchangeably with the terms "carrier" and/or "cell" within the band. In this case, each band may include one carrier or multiple (e.g., two) contiguous (or non-contiguous) carriers. The proposed methods described below may be applied to inter-band UL CA, intra-band UL CA, NR-DC, EN-DC, (standalone) SUL scenarios and related band combinations (unless otherwise specified).

For convenience of explanation in the implementations of this specification described below, the following notation is used.

- When UTS occurs, it may be expressed as a UTS trigger.
- Band (or carrier) related to UTS: This may refer to a band/carrier before and after UTS occurs.
- A Tx chain transition time caused by UTS is denoted as a UTS gap (or UTS period). During the UTS gap, no UL transmission occurs in the band/carrier related to the UTS. The UTS gap (switching gap) and the UTS period (switching period) may be specifically distinguished as follows.

  ■ Switching period: Switching time reported by UE. Basically, this is a band pair unit including two bands, and is reported as one of values of {35 us, 140 us, and 210 us}. For a specific switching case, a single value may be reported as a band combination unit including three or more bands. In this specification, it may also be expressed as a UTS period/time or a switching period.

■ Switching gap: Time duration during which UL transmission in all (or some) bands related to a single UL Tx switching event due to this. The switching gap may be determined as a switching period (reported by a UE) for the corresponding Tx switching or determined by using the switching period of each band pair related to the corresponding Tx switching.

For example, for A(1T)+B(1T)->C(2T) switching, in which transmission occurs using 2 Tx chains on a band C while 1 Tx chain is connected to a band A and 1 Tx chain is connected to a band B, if a band combination {A+B, C} is reported by the UE, the switching gap is determined as a reported value. If not reported, the switching gap may be determined as a value derived using the switching period AB (period_AB) for a band pair including the bands A and B and the switching period AC (period_AC) for a band pair including the bands A and C. In this specification, it may also be expressed as a UTS gap/interval or a switching interval.

- A 1 Tx chain may be expressed as 1T, and a 2Tx chain may be expressed as 2T.

1-port UL transmission may be expressed as 1p, and 2-port UL transmission may be expressed as 2p.

- When 1 Tx chain or 2 Tx chains are connected to a certain band A (and/or carrier(s) belonging to the band A), these states may be expressed as A(1T) and A(2T), respectively.
- When 1 Tx chain is connected to each of two specific bands A (and/or carrier(s) belonging to band A) and band B (and/or carrier(s) belonging to band A), this state may be expressed as A(1T)+B(1T).
- UL transmission may mean any UL channel or UL signal supported by NR, and the like.
- "Previous transmission" may mean the most recent UL transmission performed by the UE prior to UTS triggering, and "current transmission" may mean UL transmission performed by the UE immediately (or simultaneously) with UTS triggering. The term "transmission" hereinafter may mean "UL transmission".
- The expression that UL transmission occurs may mean UL transmission scheduled via DCI for a UL grant and/or UL transmission configured via higher layer signaling (e.g., RRC signaling) (e.g., configured grant UL transmission).
- When 1-port UL transmission occurs in a specific band A (and/or carrier(s) belonging to band A), it may be expressed as A(1p), and when 2-port UL transmission occurs, it may be expressed as A(2p).
- When 1-port UL transmission occurs in two specific bands, e.g., band A and band B, (and/or carrier(s) belonging to the corresponding band), it may be expressed as A(1p)+B(1p).

An RRC parameter uplinkTxSwitchingOption provided to the UE by the BS may indicate which option is configured for dynamic UL Tx switching for inter-band UL CA or (NG)EN-DC. This RRC parameter is configured to swtichedUL when a network configures Option1, and is configured to dualUL when the network configures Option2. When the UE receives the corresponding RRC value configured to "switchedUL", the UE does not expect/perform that 1 Tx chain is to be connected to each of the corresponding two bands, or does not expect/perform concurrent transmission (instruction/configuration) on the corresponding two bands even if 1 Tx chain is connected to each of the two bands. Hereinafter, this is expressed as an Option 1 operation configured. For example, the UE configured with switchedUL may not expect concurrent transmission of A(1T) and B(1T) to be instructed/configured, and the BS may not instruct/configure concurrent transmission of A(1T) and B(1T) to the UE. When the UE receives the corresponding RRC value configured to "dualUL", the UE may expect to schedule/configure (or perform) concurrent transmission on the corresponding two bands via 1 Tx chains connected to each of the two bands, and this is expressed as an Option2 operation configured below.

The Tx chain may also be expressed as Tx or a transmitter.

Some implementations of this specification described below are described in terms of UTS generation between two bands in a situation in which four bands/carriers are configured (or activated). However, the same method(s) as the implementations of this specification described below may also be applied to UTS that occurs in a situation in which a smaller number of bands (e.g., 3) are configured/activated. The same method(s) as the implementations of this specification described below may also be applied to UTS that occurs in a situation in which a larger number of bands (e.g., 5) are configured/activated.

Some implementations of this specification described below are described without distinguishing between 1Tx-2Tx switching or 2Tx-2Tx switching. However, some implementations may be specifically applicable to 1Tx-2Tx switching and/or 2Tx-2Tx switching.

In some implementations of this specification described below, the "simultaneous transmission" in multiple bands may mean that a start time (e.g., start symbol) of UL transmissions in each of the corresponding multiple bands coincide and/or some (or all) of the UL transmission resources/periods in each of the multiple bands overlap in time.

Unless otherwise specified, the band pair or band combination mentioned in this specification may mean any (specific) band combination, a combination (pair) of two bands belonging to any (specific) band combination, or a combination (pair) of two bands unrelated to any (specific) band combination. Therefore, the two bands may belong to different band combinations.

In this specification, the symbols '-', '■', '♦', and '●' listed at the frontmost paragraph may indicate vertical/horizontal relationships between descriptions in each paragraph. In detail, it may mean upper categories in the order of '-', **'■',** '♦', and '●'. For example, the '■' stated after '-' may be an additional explanation for '-'. The '♦' following '■' may be an additional explanation for '■'. The '●' following '♦' may be an additional explanation for '♦'.

Table 8 contains the contents described in the existing standards (3GPP 38.213 and 38.214) and includes the contents regarding a preparation time and minimum interval related to UL Tx switching.

[Table 8]

9.2.5 UE procedure for reporting multiple UCI types

<*omitted text*>

If there is at least one PUSCH in the group of overlapping PUCCHs and PUSCHs, $T_{proc,2}^{mux}$ is given by maximum of $\{T_{proc,2}^{mux,1}, \cdots, T_{proc,2}^{mux,i}, \cdots\}$ where for the i-th PUSCH which is in the group of overlapping PUCCHs and PUSCHs, $T_{proc,2}^{mux,i} = max\left((N_2 + d_{2,1} + 1) \cdot (2048 + 144) \cdot \kappa \cdot 2^{-\mu} \cdot T_C + T_{\text{switch}}, d_{2,2}\right)$, $d_{2,1}$, $d_{2,2}$ and $T_{\text{switch}}$ are selected for the i-th PUSCH following [6, TS 38.214], $N_2$ is selected based on the UE PUSCH processing capability of the i-th PUSCH and SCS configuration $\mu$, where $\mu$ corresponds to the smallest SCS configuration among the SCS configurations used for the PDCCH scheduling the i-th PUSCH, the PDCCHs scheduling the PDSCHs or providing the SPS PDSCH releases or providing the SCell dormancy indication or providing the indication of a request for a Type-3 HARQ-ACK codebook report without scheduling PDSCH with corresponding HARQ-ACK transmission on a PUCCH which is in the group of overlapping PUCCHs/PUSCHs, and all PUSCHs in the group of overlapping PUCCHs and PUSCHs.

If there is no PUSCH in the group of overlapping PUCCHs and PUSCHs, $T_{proc,2}^{mux}$is given by maximum of $\{T_{proc,2}^{mux,1}, \cdots, T_{proc,2}^{mux,i}, \cdots\}$ where for the i-th PDSCH or the i-th SPS PDSCH release or the i-th SCell dormancy indication or the i-th indication of a request for a Type-3 HARQ-ACK codebook report without scheduling PDSCH with corresponding HARQ-ACK transmission on a PUCCH which is in the group of overlapping PUCCHs, $T_{proc,2}^{mux,i} = (N_2 + 1) \cdot (2048 + 144) \cdot \kappa \cdot 2^{-\mu} \cdot T_C$, $N_2$is selected based on the UE PUSCH processing capability of the PUCCH serving cell if configured. $N_2$ is selected based on the UE PUSCH processing capability 1, if PUSCH processing capability is not configured for the PUCCH serving cell. $\mu$ is selected based on the smallest SCS configuration between the SCS configuration used for the PDCCH scheduling the i-th PDSCH or providing the i-th SPS PDSCH release or providing the i-th SCell dormancy indication or providing the i-th indication of a request for a Type-3 HARQ-ACK codebook report without scheduling PDSCH with corresponding HARQ-ACK transmission on a PUCCH which is in the group of overlapping PUCCHs, and the SCS configuration for the PUCCH serving cell.

- if there is an aperiodic CSI report multiplexed in a PUSCH in the group of overlapping PUCCHs and PUSCHs, $S_0$ is not before a symbol with CP starting after $T_{proc,CSI}^{mux} = max\left((Z + d) \cdot (2048 + 144) \cdot \kappa \cdot 2^{-\mu} \cdot T_C + T_{\text{switch}}, d_{2,2}\right)$ after a last symbol of

- any PDCCH with the DCI format scheduling an overlapping PUSCH, and

- any PDCCH scheduling a PDSCH, or SPS PDSCH release, or providing a DCI format 1_1 indicating SCell dormancy, or a DCI format 1_1 indicating a request for a Type-3 HARQ-ACK codebook report without scheduling PDSCH, with corresponding HARQ-ACK information in an overlapping PUCCH in the slot

where $\mu$ corresponds to the smallest SCS configuration among the SCS configuration of the PDCCHs, the smallest SCS configuration for the group of the overlapping PUSCHs, and the smallest SCS configuration of CSI-RS associated with the DCI format scheduling the PUSCH with the multiplexed aperiodic CSI report, and $d = 2$ for $\mu = 0,1$ , $d = 3$ for $\mu = 2$ and $d = 4$ for $\mu = 3$. $T_{\text{switch}}$ is defined in [6, TS 38.214] and it is applied only if $Z_1$ of table 5.4-1 in [6, TS 38.214] is applied to the determination of $Z$.

- $N_1$, $N_2$, $d_{1,1}$, $d_{2,1}$, $d_{2,2}$, and $Z$ are defined in [6, TS 38.214] and $\kappa$ and $T_C$ are defined in [4, TS 38.211].

<*omitted text*>

5.4 UE CSI computation time

When the *CSI request* field on a DCI triggers a CSI report(s) on PUSCH, the UE shall provide a valid CSI report for the *n*-th triggered report,

- if the first uplink symbol to carry the corresponding CSI report(s) including the effect of the timing advance, starts no earlier than at symbol $Z_{ref}$, and
- if the first uplink symbol to carry the *n*-th CSI report including the effect of the timing advance, starts no earlier than at symbol $Z'_{ref}(n)$,

where $Z_{ref}$ is defined as the next uplink symbol with its CP starting $T_{\text{proc,CSI}} = (Z)(2048 + 144) \cdot \kappa 2^{-\mu} \cdot T_{\text{c}} + T_{\text{switch}}$ after the end of the last symbol of the PDCCH triggering the CSI report(s), and where $Z'_{ref}(n)$, is defined as the next uplink symbol with its CP starting $T'_{\text{proc,CSI}} = (Z')(2048 + 144) \cdot \kappa 2^{-\mu} \cdot T_{\text{c}}$ after the end of the last symbol in time of the latest of: aperiodic CSI-RS resource for channel measurements, aperiodic CSI-IM used for interference measurements, and aperiodic NZP CSI-RS for interference measurement, when aperiodic CSI-RS is used for channel measurement for the *n*-th triggered CSI report, and where $T_{switch}$ is defined in clause 6.4 and is applied only if $Z_1$ of table 5.4-1 is applied.

*<omitted text>*

6.4 UE PUSCH preparation procedure time

If the first uplink symbol in the PUSCH allocation for a transport block, including the DM-RS, as defined by the slot offset $K_2$ and the start $S$ and length $L$ of the PUSCH allocation indicated by '*Time domain resource assignment*' of the scheduling DCI and including the effect of the timing advance, is no earlier than at symbol $L_2$, where $L_2$ is defined as the next uplink symbol with its CP starting $T_{\mathrm{proc},2} = max\left((N_2 + d_{2,1} + d_2)(2048 + 144) \cdot \kappa 2^{-\mu} \cdot T_{\mathrm{c}} + T_{\mathrm{ext}} + T_{\mathrm{switch}}, d_{2,2}\right)$ after the end of the reception of the last symbol of the PDCCH carrying the DCI scheduling the PUSCH, then the UE shall transmit the transport block.

- $N_2$ is based on $\mu$ of Table 6.4-1 and Table 6.4-2 for UE processing capability 1 and 2 respectively, where $\mu$ corresponds to the one of ($\mu_{DL}$, $\mu_{UL}$) resulting with the largest $T_{proc,2}$, where the $\mu_{DL}$ corresponds to the subcarrier spacing of the downlink with which the PDCCH carrying the DCI scheduling the PUSCH was transmitted and $\mu_{UL}$ corresponds to the subcarrier spacing of the uplink channel with which the PUSCH is to be transmitted, and $\kappa$ is defined in clause 4.1 of [4, TS 38.211].
- For operation with shared spectrum channel access, $T_{\mathrm{ext}}$ is calculated according to [4, TS 38.211], otherwise $T_{\mathrm{ext}}$=0.
- If the first symbol of the PUSCH allocation consists of DM-RS only, then $d_{2,1}$ = 0, otherwise $d_{2,1}$ = 1.
- If the UE is configured with multiple active component carriers, the first uplink symbol in the PUSCH allocation further includes the effect of timing difference between component carriers as given in [11, TS 38.133].
- If the scheduling DCI triggered a switch of BWP, $d_{2,2}$ equals to the switching time as defined in [11, TS 38.133], otherwise $d_{2,2}$=0.
- If a PUSCH of a larger priority index would overlap with PUCCH of a smaller priority index, $d_2$ for the PUSCH of a larger priority is set as reported by the UE; otherwise $d_2 = 0$.
- For a UE that supports capability 2 on a given cell, the processing time according to UE processing capability 2 is applied if the high layer parameter *processingType2Enabled* in *PUSCH-ServingCellConfig* is configured for the cell and set to 'enable',
- If the PUSCH indicated by the DCI is overlapping with one or more PUCCH channels, then the transport block is multiplexed following the procedure in clause 9.2.5 of [6, TS 38.213], otherwise the transport block is transmitted on the PUSCH indicated by the DCI.
- If uplink switching gap is triggered as defined in clause 6.1.6, $T_{\mathrm{switch}}$ equals to the switching gap duration and for the UE configured with higher layer parameter *uplinkTxSwitchingOption* set to 'dualUL' for uplink carrier aggregation $\mu_{UL}$=min($\mu_{UL,carrier1}$, $\mu_{UL,carrier2}$), otherwise $T_{\mathrm{switch}}$=0.

<*omitted text*>

| |
|---|
| 6.2.1 UE sounding procedure<br><*omitted text*><br>For a UE configured with one or more SRS resource configuration(s), and when the higher layer parameter *resourceType* in *SRS-Resource* or *SRS-PosResource* is set to 'aperiodic':<br>- the UE receives a configuration of SRS resource sets,<br>- the UE receives a downlink DCI, a group common DCI, or an uplink DCI based command where a codepoint of the DCI may trigger one or more SRS resource set(s). For SRS in a resource set with usage set to 'codebook' or 'antennaSwitching', the minimal time interval between the last symbol of the PDCCH triggering the aperiodic SRS transmission and the first symbol of SRS resource is $N_2$ symbols and an additional time duration $T_{switch}$. Otherwise, the minimal time interval between the last symbol of the PDCCH triggering the aperiodic SRS transmission and the first symbol of SRS resource is $N_2$ +14 symbols and an additional time duration $T_{switch}$. The minimal time interval unit of OFDM symbol is counted based on the minimum subcarrier spacing given by min($\mu_{PDCCH}$, $\mu_{UL}$) where $\mu_{UL}$ is given by min($\mu_{UL,carrier1}$, $\mu_{UL,carrier2}$, $\mu_{SRS}$) when the UE is configured with the higher layer parameter *uplinkTxSwitchingOption* set to 'dualUL' for uplink carrier aggregation, and by $\mu_{SRS}$ otherwise. $\mu_{SRS}$ and $\mu_{PDCCH}$ are the subcarrier spacing configurations for triggered SRS and PDCCH carrying the triggering command respectively.<br>- $T_{switch}$, $\mu_{UL,carrier1}$ and $\mu_{UL,carrier2}$ are defined in clause 6.4.<br>- ...<br><*omitted text*> |
| 6.1.6 Uplink switching<br><*omitted text*><br>The UE does not expect to perform more than one uplink switching in a slot with $\mu_{UL}$ = max($\mu_{UL,1}$, $\mu_{UL,2}$), where the $\mu_{UL,1}$ corresponds to the subcarrier spacing of the active UL BWP of one uplink carrier before the switching gap and the $\mu_{UL,2}$ corresponds to the subcarrier spacing of the active UL BWP of the other uplink carrier after the switching gap.<br><*omitted text*> |

[1] Method of configuring (additional) preparation time for UL Tx switching

[1-1] Referring to Tables 5 to 8 above, a UE configured with UL Tx switching may apply an additional preparation time $T_{switch}$ considering a UL Tx switching operation when determining a preparation time before the corresponding UL transmission or a processing time, for PUSCH transmission, SRS transmission, and/or CSI reporting. This preparation time may be understood as ensuring a time for the Tx chain to be switched for the corresponding UL transmission.
[1-2] When UL Tx switching is configured to three or four bands, a longer preparation time than a preparation time defined in a conventional communication system may be required. In this specification, the additional preparation time for UL Tx switching in these three or more bands will be simply expressed as $T_{switch,2}$ (or T2).

- Why T2 is needed

■ In UL Tx switching of 3GPP TS Rel-17, one or two Tx chains are switched in up to two bands configured in the UE. When UL Tx switching operates on three or more bands, the number of bands over which a Tx chain may be switched increases. Therefore, a new switching case occurs compared to the conventional one. This increases a frequency difference between a band before switching (=switch-from band) and a band after switching (=switch-to band) when the Tx chain is switched. Switching of the Tx chain related to more than three bands may complicate a memory-related implementation of the UE. This may be a burden on a UE implementation because the amount of data (e.g., PUSCH) and/or RF-related information that needs to be stored before/after Tx switching may increase. The implementation burden of the UE may be reduced by changing (e.g., increasing) a time required for UL Tx switching.

[1-3] The UE may report the T2 value, a band combination to which the T2 value is applied, and/or a switching case to which the T2 value is applied, as UE capabilities. The time/memory requirements for switching Tx chains over three or more bands may vary from UE to UE, and thus it may be reasonable to report a preferred (supportable) T2 value and/or a switching case corresponding to the T2 value for each UE.

- Method 1: Reporting Method

  ■ Method 1-1: The UE capabilities may be reported per band or band combination, or for each band/band combination.

    ♦ Method 1-1-1: The UE may report one common T2 value for a plurality of bands or band combination configured in the UE.

    ♦ Method 1-1-2: The UE may report separate (e.g., same or different) T2 values for each band or band combination with respect to a plurality of bands or band combinations configured in the UE.

- Method 1-2: The UE capabilities may be reported for a specific Tx switching case or for each Tx switching case.

  ♦ Method 1-2-1: The UE may report the T2 value and the specific Tx switching case to which T2 is applied as a separate UE capability. For example, values (e.g., same or different T2 values) may be reported for each Tx switching case.
  ♦ Method 1-2-2: The UE may report a combination of a specific Tx switching case requiring an additional preparation time and a T2 value for the corresponding as a single UE capability.

- Method 2: A UE may define a T2 value reported by one of the methods 1 as follows.

  ■ Method 2-1: T2 may be defined as a minimum time required for the UE to perform the corresponding UL Tx switching operation. In this case, the T2 value configured/indicated via RRC (or DCI) may be the reported value or a value greater than or equal to (or exceeding) the value.
  ■ Method 2-2: T2 may be defined as a maximum time required for the UE to perform the corresponding UL Tx switching operation. In this case, the T2 value configured/indicated via RRC (or DCI) may be the reported value or a value less than or equal to (or less than) the value.

[1-4] The UE may be configured with a T2 value and/or a switching case to which the T2 value is to be applied, via RRC.

- Method 1: The UE may be configured with the T2 value applied to the corresponding band or band combination via RRC signaling, for each band or band combination. In this case, the corresponding RRC configuration may have the same or different T2 values for each band or band combination. In this case, the present method may be applied together with the [1-3]-[Method 1-1-2], but is not limited thereto.
- Method 2: The UE may be configured with one T2 value to be commonly applied to all bands or band combinations configured for UTS through RRC signaling. In this case, the present method may be applied together with the [1-3]-[Method 1-1-1], but is not limited thereto.

  ■ When this method is applied together with the [1-3]-[Method 1-1-2] and different T2 values are reported for each band or band combination,

    ♦ the UE is configured to a largest value from among the reported values. The present method may be applied together with the [1-3]-[Method 2-2], but is not limited thereto.
    ♦ Alternatively, the UE is configured to a smallest value from among the reported values. The present method may be applied together with the [1-3]-[Method 2-1], but is not limited thereto.

- Method 3: The UE may be configured with a specific switching case to which T2 is to be applied, via RRC. Alternatively, the UE may be configured with a T2 value to be applied for each switching case.

  ■ For example,

    ♦ For switching cases in which all 3 or 4 bands configured to the UE are related, T2 may be applied to the corresponding UL transmission.

♦ In a band in which a Tx chain is located, T2 may be applied to the corresponding UL transmission in a case in which switching related to both Tx chains occurs.
♦ T2 may be applied to 2-port UL transmission triggering UTS.
♦ T2 may be applied to concurrent UL transmissions triggering UTS.
♦ T2 may be applied to switching between a plurality of (e.g., 2) different timing advance groups (TAGs).

- In other words, T2 may be applied when the switch-from band and the switch-to band belong to different TAGs.
- Alternatively, T2 may be applied when two bands or two UL transmissions that trigger UTS belong to different TAGs.

- Method 4: A UE may be jointly configured with the "T2 value" and the "switching case to which the corresponding T2 is to be applied", through RRC signaling. In this case, a combination of one or more of the methods 1/2/3 may be used.

[1-5] The UE may be configured/instructed with the T2 value (and/or the switching case to which the T2 value is to be applied) via DCI.

- Method 1: The UE may be configured/received with a T2 value for each band or band combination through DCI. In this case, the T2 value may have different values for each band or band combination. In this case, the present method may be applied together with the [1-3]-[Method 1-1-2], but is not limited thereto.
- Method 2: The UE may be configured/received with one T2 value to be commonly applied to all bands or band combinations configured for UTS, through DCI. In this case, the present method may be applied together with the [1-3]-[Method 1-1-1], but is not limited thereto.

■ When this method is applied together with the [1-3]-[Method 1-1-2] and different T2 values are reported for each band or band combination,

♦ the UE is configured to a largest value from among the reported values. The present method may be applied together with the [1-3]-[Method 2-2], but is not limited thereto.
♦ Alternatively, the UE is configured to a smallest value from among the reported values. The present method may be applied together with the [1-3]-[Method 2-1], but is not limited thereto.

- Method 3: The UE may be configured/instructed with a specific switching case to which T2 is to be applied, via DCI.

■ For example,

♦ For switching cases in which all 3 or 4 bands configured to the UE are related, T2 may be applied to the corresponding UL transmission.
♦ T2 may be applied to 2-port UL transmission triggering UTS.
♦ T2 may be applied to concurrent UL transmissions triggering UTS.
♦ T2 may be applied to switching between a plurality of (e.g. 2) different TAGs.

- In other words, when the switch-from band and the switch-to band belong to different TAGs, T2 may be applied.
- Alternatively, T2 may be applied when two bands or two UL transmissions that trigger UTS belong to different TAGs.

- Method 4: A UE may be jointly configured/instructed with the "T2 value" and the "switching case to which the corresponding T2 is to be applied". In this case, a combination of one or more of the methods 1/2/3 may be used.
- The DCI used in the methods 1/2/3/4 may be a UL grant that triggers UTS or DCI that schedules UL transmission. Alternatively, the T2 value may be configured/instructed via DCI separate from the UL grant that triggers UTS or the DCI that schedules UL transmission. The T2 value may also be applied to a configured UL transmission configured via RRC, or the like.
- DCI used in the methods 1/2/3/4 may include a field configured with ceil{log2{N} } bits.

■ When the T2 value is configured/instructed through the corresponding field, N may be the number of candidate values of T2 that are reported or may be reported for the corresponding UE and/or corresponding band combination. Alternatively, N may be the number of candidate values of T2, which may be or to be configured/instructed for the corresponding UE and/or the corresponding band combination.

■ When the switching case to which T2 is to be configured/instructed, through the corresponding field, N may be a total number of the switching cases.

- When both the configuration method via RRC of [1-4] and the configuration/instruction method via DCI of [1-5] are used, the configuration/instruction via DCI has priority over the configuration via RRC (from among the RRC and DCI configurations configured for the same UL transmission).

[1-6] The [1-4] and [1-5] described above may be applied to all switching cases in which UTS occurs, or only to a specific switching case. T2 may be predefined or configured/instructed via separate RRC or DCI to be applied only to a switching case in which all 3 or 4 bands are related to UTS. The switching case in which all 3 or 4 bands are related to UTS may be a case in which all 3 or 4 bands become one switch-from band or one switch-to band and/or in which band switching occurs for both Tx chains. For example, the switching case in which all 3 or 4 bands are related to UTS may be a case of scheduling from state A(1T)+B(1T) to C(1p)+D(1p), from stateA(2T) to C(1p)+D(1p), or from state A(1T)+B(1T) to C(2p).

[1-7] The [1-3] to [1-6] described above may be applied only under the following condition.

- This may be applied only when the switch-from band and the switch-to band of UL Tx switching are in different TAGs.
  - This may be applied only concurrent UL transmission in which the switch-to-band of UL Tx switching belong to different TAGs.

[1-8] When the switch-from band and the switch-to band of UL Tx switching are in different TAGs, an additional time of T3 may be added in addition to the T2 described above. Alternatively, for the case of concurrent UL transmission in which the switch-to bands of UL Tx switching belong to different TAGs, an additional time of T4 may be added in addition to the T2 described above. Values of T3 and T4 and/or whether to configure/apply the values may be predefined or configured via separate RRC or DCI.

[1-9] The proposed T2, T3, and T4 may be described in the 3GPP technical specification to be referenced in sections 6.1.6 and/or 6.4 of Tables 5 to 8 in which T_switch is defined and in which an additional preparation time is applied. Alternatively, each section may be described separately along with the conditions under which the additional preparation time is applied, in each section of the standard document in which the additional preparation time is applied.

[2] Method of configuring (additional) preparation time for PUCCH for HARQ-ACK

[2-1] T2 proposed in Chapter [1] may also be applied to PUCCH transmission that transmits HARQ-ACK of PDSCH received by the UE. Table 9 shows a PDSCH processing procedure time described in 3GPP TS 38.214. A PUCCH resource for HARQ-ACK may be configured at least T_{proc,1} hours after PDSCH reception. T2 proposed in Chapter [1] may be added to T_{proc,1}.

[Table 9]

5.3 UE PDSCH processing procedure time

If the first uplink symbol of the PUCCH which carries the HARQ-ACK information, as defined by the assigned HARQ-ACK timing $K_1$ and $K_{offset}$, if configured, and the PUCCH resource to be used and including the effect of the timing advance, starts no earlier than at symbol $L_1$, where $L_1$ is defined as the next uplink symbol with its CP starting after $T_{proc,1} = (N_1 + d_{1,1} + d_2)(2048+144) \cdot \kappa 2^{-\mu} \cdot T_C + T_{ext}$ after the end of the last symbol of the PDSCH carrying the TB being acknowledged, then the UE shall provide a valid HARQ-ACK message.

- $N_1$ is based on $\mu$ of table 5.3-1 and table 5.3-2 for UE processing capability 1 and 2 respectively, where $\mu$ corresponds to the one of ($\mu_{PDCCH}$, $\mu_{PDSCH}$, $\mu_{UL}$) resulting with the largest $T_{proc,1}$, where the $\mu_{PDCCH}$ corresponds to the subcarrier spacing of the PDCCH scheduling the PDSCH, the $\mu_{PDSCH}$ corresponds to the subcarrier spacing of the scheduled PDSCH, and $\mu_{UL}$ corresponds to the subcarrier spacing of the uplink channel with which the HARQ-ACK is assumed to be transmitted regardless of whether or not the PDSCH reception provides a transport block for a HARQ process with disabled HARQ-ACK information as indicated by *HARQ-feedbackEnabling-disablingperHARQprocess*, if provided, and κ is defined in clause 4.1 of [4, TS 38.211].
- For operation with shared spectrum channel access in FR1, $T_{ext}$ is calculated according to [4, TS 38.211], otherwise $T_{ext}$ =0.
- If the PDSCH DM-RS position $l_1$ for the additional DM-RS in Table 7.4.1.1.2-3 in clause 7.4.1.1.2 of [4, TS 38.211] is $l_1 = 12$ then $N_{1,0}=14$ in Table 5.3-1, otherwise $N_{1,0}=13$.
- If the UE is configured with multiple active component carriers, the first uplink symbol which carries the HARQ-ACK information further includes the effect of timing difference between the component carriers as given in [11, TS 38.133].
- For the PDSCH mapping type A as given in clause 7.4.1.1 of [4, TS 38.211]: if the last symbol of PDSCH is on the $i$-th symbol of the slot where $i < 7$, then $d_{1,1} = 7 - i$, otherwise $d_{1,1} = 0$
- If a PUCCH of a larger priority index would overlap with PUCCH/PUSCH of a smaller priority index and the UE is not provided *uci-MuxWithDiffPrio* for the primary PUCCH group or *uci-MuxWithDiffPrioSecondaryPUCCHgroup* for the secondary PUCCH group, $d_2$ for the PUCCH of a larger priority is set as reported by the UE; otherwise $d_2 = 0$.

Therefore, T2 may be applied in the form of T_{proc,1} = (N_1+d_{1,1}+d_2)(2048+144) · κ2^μ · T_c +T_ext+T_{switch,2} or in the form of T_{proc,1} = (N_1+d_{1,1}+d 2+N_{switch,2} )(2048+144) · κ2^-μ · T_c+T_ext. In other words, the existing T_switch is not applied or added to a PDSCH processing procedure time T_{proc,1 }, whereas T2 (T_{switch,2} ) may be applied and/or added. In this case, T_{switch,2} or N_{switch,2} may have a value greater than 0 only under a certain condition.

- Method 1: T_{switch,2} or N_{switch,2} may be applied to T_{proc,1} only when a T2 value reported by the UE is greater than or equal to a specific value.
  - ■ In this case, the specific value may be predefined or configured via RRC, or the like.
- Method 2: T_{switch,2} or N_{switch,2} may be applied to T_{proc,1} only when N1 used to calculate the T_{proc,1} is greater than or equal to a specific value.
  - ■ In this case, the specific value may be predefined or configured via RRC, or the like.
- Method 3: For the corresponding PUCCH transmission or a band combination including the carrier/band in which the corresponding PUCCH transmission is performed, T_{switch,2} or N_{switch,2} may be applied to T_{proc,1} only when a switching period for UTS reported by the UE or configured in the UE is greater than or equal to a specific value.

■ In this case, the specific value may be predefined or configured via RRC, or the like.

[3] Method of configuring minimum interval for UL Tx switching

[3-1] As in the '6.1.6 Uplink switching' section of Table 8 above, in Rel-17 UL Tx switching, two or more consecutive UL Tx switchings do not occur during one slot. Therefore, the minimum interval for all switching cases of UL Tx switching configured in two bands may be expressed as 1 slot.
[3-2] Even in UL Tx switching configured in three or more bands, a minimum interval may be configured. However, as the number of bands connected to UL Tx switching (the number of switch-from bands and the number of switch-to bands) increases as described above, or depending on a specific switching case, the required complexity of the UE may vary. Therefore, a separate minimum interval may be defined/configured depending on the switching case.
[3-3] Method of configuring minimum interval by number of bands or band pairs configured for UL Tx switching

- Method 1: Method of defining/configuring minimum interval based on number of bands or band pairs concatenated/related to UL Tx switching

  ■ Method 1-1: In case of UL Tx switching to which 3 bands are concatenated/related, it may be defined/configured to allow only one switching at most during X slot. In this case, X may be predefined or configured via RRC, or the like. The UE may report X through a UE capability. X slot may also be replaced by X symbol, X (sub)frame, or X msec.
  ■ Method 1-2: In case of UL Tx switching to which 4 bands are concatenated/related, it may be defined/configured to allow only one switching at most during Y slot. In this case, Y may be predefined or configured via RRC, or the like. The UE may report Y through a UE capability. Y slot may also be replaced by Y symbol or Y (sub)frame or Y msec.
  ■ Method 1-3: In case of UL Tx switching to which N band pairs are concatenated/related, it may be defined/configured to allow only one switching at most during X(N) slot. In this case, N and/or X(N) may be predefined or determined through a UE capability and/or corresponding RRC configurations. N represents a natural number greater than or equal to 1. X(N) slot may also be replaced by X(N) symbol, X(N) (sub)frame or X(N) msec.

    ♦ In this case, the band pair concatenated/related to UL Tx switching means one band pair including the band connected before switching of each Tx chain through UL Tx switching (switch-from band) and the band connected after switching (switch-to band). N band pairs refer to the number of band pairs including {switch-from band, and switch-to band}.
    ♦ For example, in case of UL Tx switching to which two band pairs are concatenated/related, it may be defined/configured to allow at most one switching during X(2) slot. In this case, X(2) may be predefined or determined through a UE capability and/or corresponding RRC configurations.

- Method 2: Method of configuring minimum interval for each specific switching case in which UL Tx switching occurs

  ■ Method 2-1: UL Tx switching to which all 2 Tx chains are switched may be defined/configured to allow only one switching at most during Z slot. In this case, Z may be predefined or configured via RRC, or the like. The UE may report Z through a UE capability. Z slot may also be replaced by Z symbol or Z (sub)frame or Z msec.
  ■ Method 2-2: UL Tx switching may be defined/configured to prevent switching between three or more different bands for a specific (short) time. For example, after a Tx chain in band A switches to band B, switching to another band C may be defined/configured to be allowed after K slots (or symbol or (sub)frame or msec). In this case, K may be predefined or configured via RRC, or the like. The UE may report Z through a UE capability. Z slot may also be replaced by Z symbol or Z (sub)frame or Z msec.

- Method 3: Method of determining length of minimum interval

  ■ Method 3-1: For the above [Method 1] and [Method 2], the number of slots (or symbol or (sub)frame) corresponding to the minimum interval may be determined based on the largest or smallest SCS from among SCSs of a band related to each UL Tx switching. For example, X in [Method 1-1] may be defined as the number of slots (or symbols) based on the largest or smallest SCS from among the SCSs configured in three bands. Y in [Method 1-2] may be defined as the number of slots (or symbols) based on the largest or smallest SCS from among the SCSs configured in four bands.

■ Method 3-2: Either the largest or smallest SCS may be reported as a UE capability or configured via RRC. In addition, (in case of [Method 2]) the minimum interval for a specific switching case may be reported as a UE capability or configured via RRC, or the like.

- Method 3-3: Regardless of the SCS of the band related to UL Tx switching, the minimum interval may be defined/configured as the number of slots (or symbol or (sub)frame) of 15 kHz SCS or the number of slots (or symbol or (sub)frame) of 30 kHz SCS.

The proposed methods may be defined/configured by a minimum separation time between consecutive UL Tx switchings.

Method of configuring minimum interval by number of bands or band pairs configured for UL Tx switching

- Method A: Method of defining/configuring minimum separation time between consecutive UL Tx switchings, depending on the band or number of bands related to UL Tx switching, or depending on the switching case/pattern.

  ■ Method A-1: After UL Tx switching related to 3 or 4 bands occurs, it may be defined/configured such that no additional UL Tx switching related to 3 or 4 bands occurs during X slot. Alternatively, after UL Tx switching related to 2 band pairs occurs, it may be defined/configured such that no additional UL Tx switching related to 2 band pairs occurs during X slot. Alternatively, it may be defined/configured such that after Tx switching occurs in which both 2 Tx chains are switched, no additional UL Tx switching occurs in which both 2 Tx chains are switched during the X slot. X slot may also be replaced by X symbol, X (sub)frame, or X msec.

  ♦ X may be predefined or configured via RRC, or the like. The UE may report X through a UE capability.

  ■ MethodA-2: After UL Tx switching related to 3 or 4 bands occurs, it may be defined/configured such that no arbitrary UL Tx switching occurs during X slot. Alternatively, after UL Tx switching related to 2 band pairs occurs, it may be defined/configured such that no arbitrary UL Tx switching occurs during X slot. Alternatively, after UL Tx switching in which both 2 Tx chains occurs, it may be defined/configured such that no additional arbitrary Tx switching occurs during the X slot. X slot may also be replaced by X symbol, X (sub)frame, or X msec.

  ♦ X may be predefined or configured via RRC, or the like. The UE may report X through a UE capability.

  ■ Method A-3: After arbitrary UL Tx switching occurs, it may be defined/configured such that no UL Tx switching related to 3 or 4 bands occurs during X slot. Alternatively, after arbitrary UL Tx switching occurs, it may be defined/configured such that no additional UL Tx switching related to 2 band pairs occurs during X slot. Alternatively, after arbitrary UL Tx switching occurs, it may be defined/configured such that no additional UL Tx switching during which both 2 Tx chains are switched occurs during X slots. X slot may also be replaced by X symbol, X (sub)frame, or X msec.

  ♦ X may be predefined or configured via RRC, or the like. The UE may report X through a UE capability.

In the above Method A, the minimum separation time between consecutive UL Tx switching may be defined/-configured as one of the following.

- For two consecutive Tx switchings, an interval between a slot of UL transmission of previous Tx switching and a slot of UL transmission of subsequent Tx switching.
- For two consecutive Tx switchings, an interval between a 1st symbol of UL transmission of previous Tx switching and a 1st symbol of UL transmission of subsequent Tx switching.
- For two consecutive Tx switchings, an interval between a last symbol of UL transmission of previous Tx switching and a last symbol of UL transmission of subsequent Tx switching.
- For two consecutive Tx switchings, an interval between a last symbol of UL transmission of previous Tx switching and a 1st symbol of UL transmission of subsequent Tx switching.

- For two consecutive Tx switchings, an interval between a 1st symbol of UL transmission of previous Tx switching and a last symbol of UL transmission of subsequent Tx switching.

[3-4] A minimum interval for UL cancellation may be defined or configured.

- The UL cancellation may mean UL cancellation configured/indicated via DCI format 2_4.
- Necessity

■ According to Rel-17 specifications,

♦ UE does not expect to cancel the PUSCH transmission or the SRS transmission before a corresponding symbol that is $T_{proc,2}$ assuming that $d_{2,1}$=0 after a last symbol of the PDCCH reception where the UE detects the DCI format 2_4.

■ Therefore, as described in [1] and [2] above, when an additional preparation time for UL transmission is introduced, UL cancellation may not be allowed during the increased $T_{proc,2}$ (i.e., $T_{proc,2}$ with $T_{switch,2}$>0), which may decrease resource utilization efficiency.

- Proposed method

■ In case that additional preparation time (=$T_{switch,2}$) for UL Tx switching is configured in 3 or more bands and $T_{proc,2}$ increases due to this, T2 may not be applied/added to $T_{proc,2}$, which is a processing time for UL cancellation configured/indicated by DCI format 2_4. That is, PUSCH or SRS transmission is not canceled from the last symbol of PDCCH reception until "$T_{proc,2}$ with $T_{switch,2}$=0". Here, PUSCH or SRS transmission may be cancelled during a time interval between a symbol corresponding to "$T_{proc,2}$ with $T_{switch,2}$=0" and a symbol corresponding to "$T_{proc,2}$ with $T_{switch,2}$>0".

■ For example, based on the above, the 3GPP standard document corresponding to the UL cancellation part may be modified as follows.

♦ UE does not expect to cancel the PUSCH transmission or the SRS transmission before a corresponding symbol that is $T_{proc,2}$ assuming that $d_{2,1}$=0 <u>and $T_{switch,2}$=0</u> after a last symbol of the PDCCH reception where the UE detects the DCI format 2_4.

The contents of the present disclosure are not limitedly applied only to UL and/or DL signal transmission and reception. For example, the contents of the present disclosure may also be used for direct communication between UEs. In this document, the term base station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

<u>Implementation examples</u>

FIG. 5 is a flowchart of a signal transmission and reception method according to embodiments of the present disclosure.

Referring to FIG. 5, a signal transmission and reception method according to an embodiment of the present disclosure may be performed by a UE and may include configuring at least three UL bands (S501), and performing first UL switching and second UL switching (S503).

Referring to section [3] of this specification, a minimum interval may be configured between first UL switching and second UL switching. Three or more UL bands are related to at least one UL switching, and thus at least three UL bands are included in transmissions before the first UL, between the first UL switching and the second UL switching, and after the second UL switching. A minimum interval is configured between the first UL switching and the second UL switching, and thus a time interval (or separation time) between the first UL switching and the second switching is not configured to be less than the minimum interval (or specific time interval). In other words, the separation time between the first UL switching and the second switching is not expected to be less than a specific time interval.

Referring to section [3-3], the specific time interval may be configured in units of slots, symbols, (sub)frames or absolute times. When a specific time interval is configured, UL switching is not performed more than once during the specific time interval. Therefore, the UE does not expect to perform UL switching more than once within a specific time interval. When the specific time interval is an absolute time interval, the specific time interval may be, for example, 500 us.

Referring to Method 1 of section [3-3], for UL switching related to three UL bands, the X slot may be configured to a specific time interval, and for UL switching related to four UL bands, the Y slot may be configured to a specific time interval. Alternatively, referring to Method 2 of section [3-3], Z slot may be configured to a specific time interval for the case in which all 2 tx chains are switched. Referring to Method 3 of section [3-3], when the specific time interval is a slot, symbol or (sub) frame interval, the specific time interval may be configured based on the largest SCS configuration value from among the UL bands related to the UL switching. The specific time interval may be predefined or configured via RRC signaling and may also be reported via UE capabilities.

Although not illustrated, a signal transmission and reception method according to another embodiment of the present disclosure may be performed by a UE and may include configuring at least three UL bands and performing second transmission after first transmission. Here, the second transmission may be one of PUSCH transmission, SRS transmission, CSI report, and/or PUCCH transmission including a HARQ-ACK. When UL switching is performed based on the first transmission and the second transmission, the UE may perform the second transmission based on a PUSCH preparation procedure time (or PDSCH processing procedure time) that reflects an additional preparation time (or additional processing time) for the UL switching, based on a combination of one or more of the methods described in section [1] or section [2].

In addition to the operations described with respect to FIG. 5, one or more of the operations described with reference to FIGS. 1 to 4 and/or the operations described in sections [1] to [3] may be additionally performed in combination.

<u>Example of communication system to which the present disclosure is applied</u>

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwi se specified.

FIG. 6 illustrates a communication system 1 applied to the present disclosure.

Referring to FIG. 6, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireles s communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 7 illustrates wireless devices applicable to the present disclosure.

Referring to FIG. 7, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transc eiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g.,

baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 8 illustrates another example of a wireless device applied to the present disclosure. The wireless device may be implemented in various forms according to a use case/service (refer to FIG. 6).

Referring to FIG. 8, wireless devices 100 and 200 may correspond to the wireless devices 100 and 200 of FIG. 7 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 7. For example, the transceiver(s) 114 may include the one or more transceivers 106 and 206 and/or the one or more antennas 108 and 208 of FIG. 7. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcasting terminal, a hologram device, a public safety device, an MTC device, a medical device, a FinTech device (or a finance device), a security device, a climate/environment device, the AI server/device (400 of FIG. 6), the BSs (200 of FIG. 6), a network node, or the like. The wireless device may be mobile or fixed according to a use case/service.

In FIG. 8, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 9 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

**1.** A method of transmitting and receiving a signal by a user equipment (UE) in a wireless communication system, the method comprising:

configuring at least three uplink (UL) bands; and
performing first UL switching and second UL switching,
wherein the at least three UL bands are included in transmissions before the first UL switching, between the first UL switching and the second UL switching, or after the second UL switching, and
a time interval between the first UL switching and the second UL switching is not configured to be less than a specific time interval.

**2.** The method of claim 1, wherein the specific time interval is configured to a specific slot interval.

**3.** The method of claim 1, wherein, during the specific time interval, no UL switching is performed more than once.

**4.** The method of claim 1, wherein the specific time interval is independently configured for a case in which a number of the at least three UL bands is three and a case in which a number of the at least three UL bands is four.

**5.** The method of claim 1, wherein the specific time interval is configured for a case in which both two Tx chains are switched.

**6.** The method of claim 2, wherein the specific slot interval is configured based on a largest subcarrier spacing (SCS) configuration value from among the at least three UL bands.

**7.** The method of claim 1, wherein the specific time interval is reported as a UE capability.

**8.** A user equipment (UE) for transmitting and receiving a signal in a wireless communication system, the UE comprising:

at least one transceiver;
at least one processor; and
at least one memory operably connected to the at least one processor and storing instructions that, when executed, cause the at least one processor to perform a specific operation,
wherein the specific operation includes:

configuring at least three uplink (UL) bands; and
performing first UL switching and second UL switching,
wherein the at least three UL bands are included in transmissions before the first UL switching, between the first UL switching and the second UL switching, or after the second UL switching, and
an interval between the first UL switching and the second UL switching is not configured to be less than a specific time interval.

**9.** The UE of claim 8, wherein the specific time interval is configured to a specific slot interval.

**10.** The UE of claim 8, wherein, during the specific time interval, no UL switching is performed more than once.

**11.** The UE of claim 8, wherein the specific time interval is independently configured for a case in which a number of the at least three UL bands is three and a case in which a number of the at least three UL bands is four.

**12.** The UE of claim 8, wherein the specific time interval is configured for a case in which both Tx chains are switched.

**13.** The UE of claim 9, wherein the specific slot interval is configured based on a largest subcarrier spacing (SCS) configuration value from among the at least three UL bands.

**14.** The UE of claim 8, wherein the specific slot interval is reported as a UE capability.

**15.** A device for a user equipment (UE), the device comprising:

at least one processor; and
at least one computer memory operably connected to the at least one processor and configured to, when executed, cause the at least one processor to perform an operation including:

configuring at least three uplink (UL) bands; and
performing first UL switching and second UL switching,
wherein the at least three UL bands are included in transmissions before the first UL switching, between the first UL switching and the second UL switching, or after the second UL switching, and
an interval between the first UL switching and the second UL switching is not configured to be less than a specific time interval.

**16.** A computer-readable nonvolatile storage medium including at least one computer program that causes a user equipment (UE) including at least one processor to perform an operation, the operation comprising:

configuring at least three uplink (UL) bands; and
performing first UL switching and second UL switching,
wherein the at least three UL bands are included in transmissions before the first UL switching, between the first UL switching and the second UL switching, or after the second UL switching, and
an interval between the first UL switching and the second UL switching is not configured to be less than a specific time interval.

【FIG. 1】

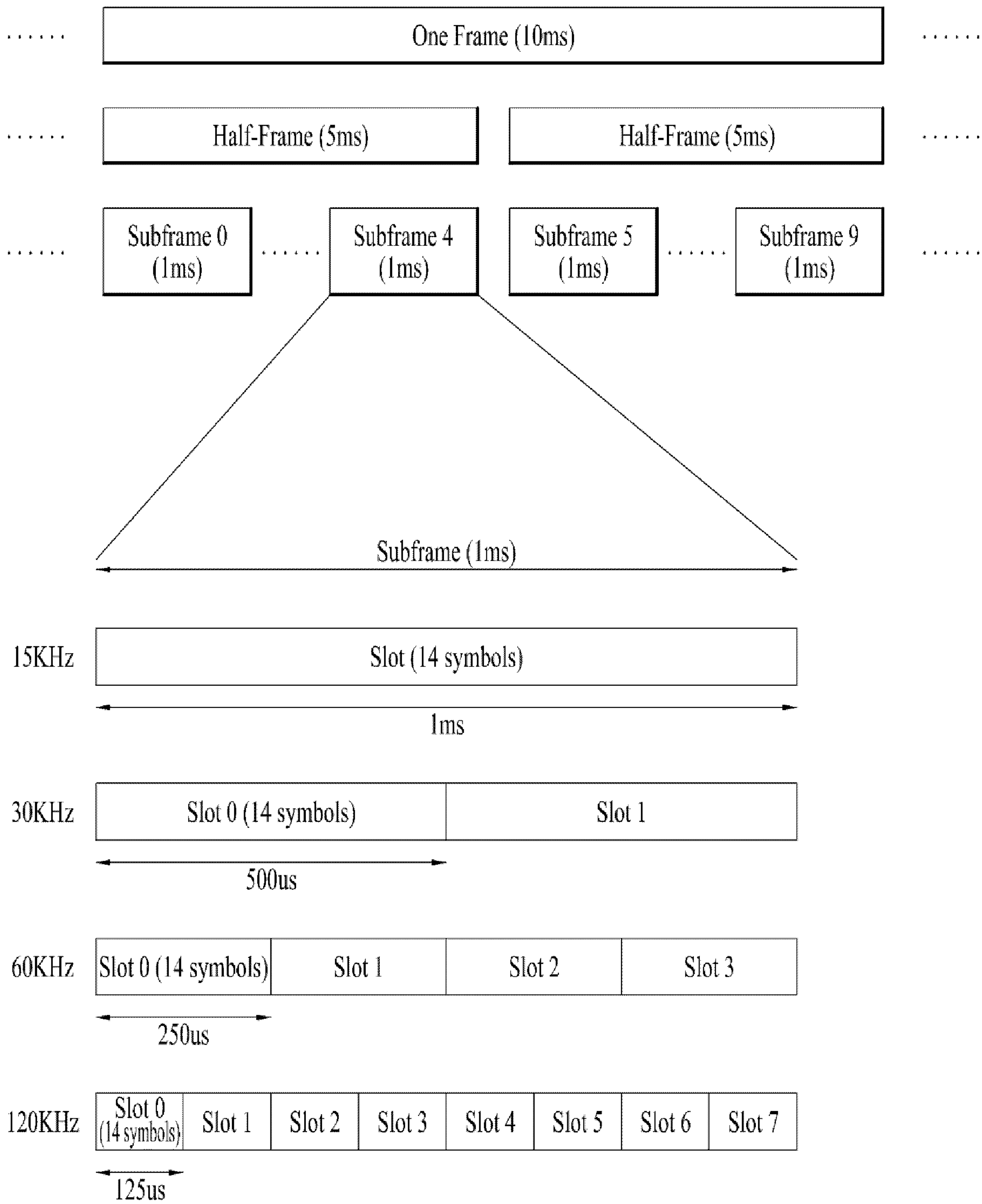

One Frame (10ms)
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot (14 symbols)
1ms
30KHz
Slot 0 (14 symbols)
Slot 1
500us
60KHz
Slot 0 (14 symbols)
Slot 1
Slot 2
Slot 3
250us
120KHz
Slot 0 (14 symbols)
Slot 1
Slot 2
Slot 3
Slot 4
Slot 5
Slot 6
Slot 7
125us

【FIG. 2】

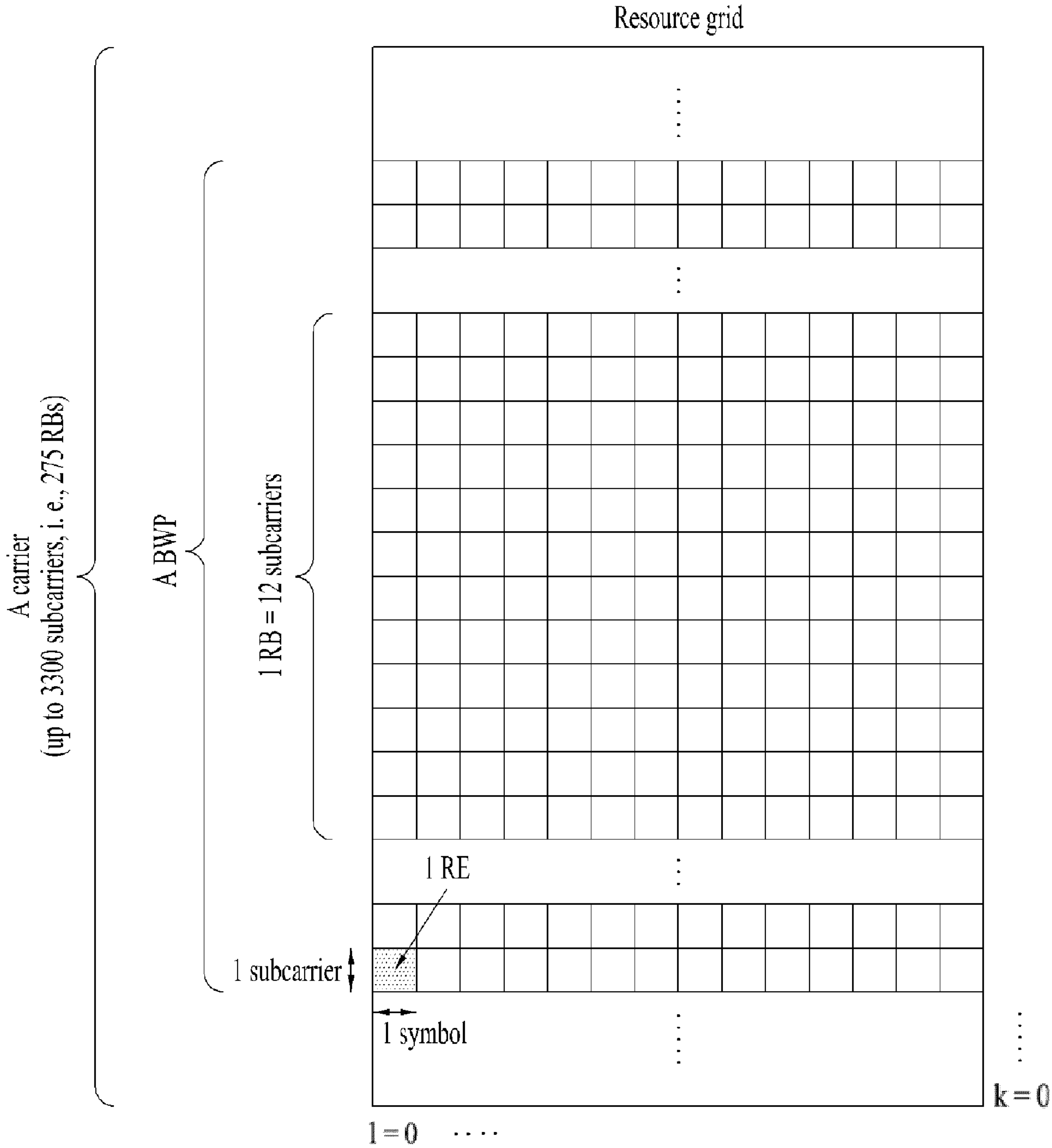
Resource grid
A carrier
(up to 3300 subcarriers, i. e., 275 RBs)
A BWP
1 RB = 12 subcarriers
1 RE
1 subcarrier
1 symbol
k = 0
l = 0

【FIG. 3】

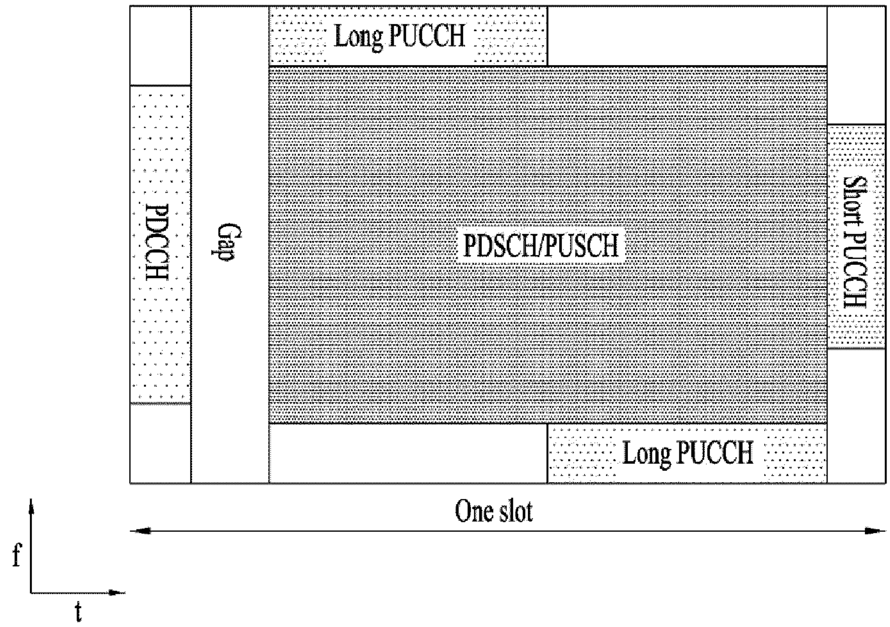
Long PUCCH
PDCCH
Gap
PDSCH/PUSCH
Short PUCCH
Long PUCCH
One slot
f
t

【FIG. 4】

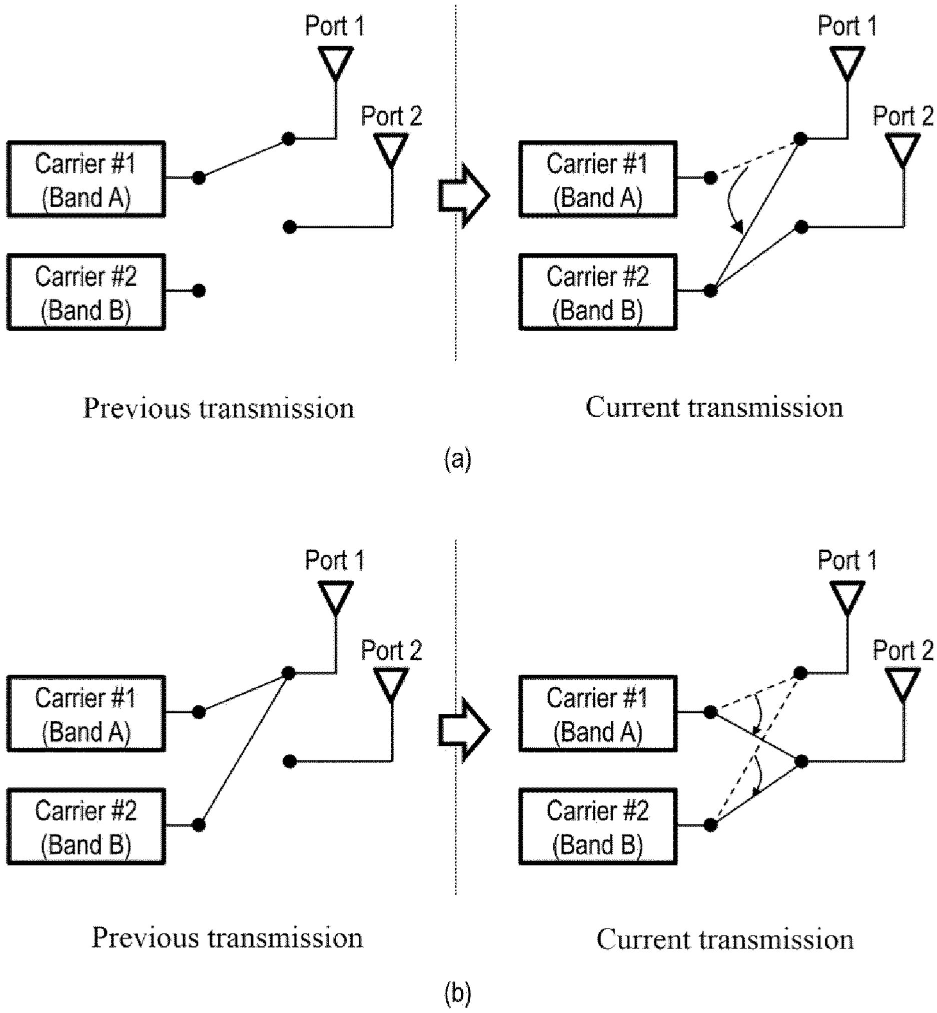
Port 1
Port 2
Carrier #1
(Band A)
Carrier #2
(Band B)
Port 1
Port 2
Carrier #1
(Band A)
Carrier #2
(Band B)
Previous transmission
Current transmission
(a)
Port 1
Port 2
Carrier #1
(Band A)
Carrier #2
(Band B)
Port 1
Port 2
Carrier #1
(Band A)
Carrier #2
(Band B)
Previous transmission
Current transmission
(b)

【FIG. 5】

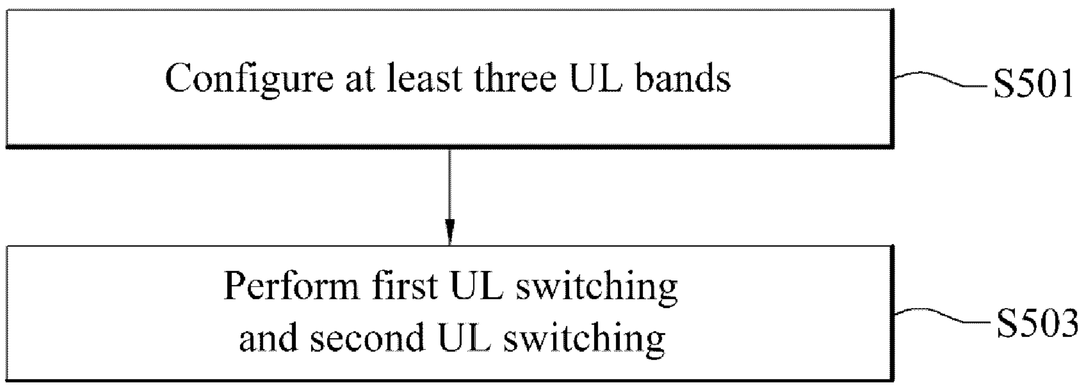
Configure at least three UL bands
S501
Perform first UL switching
and second UL switching
S503

【FIG. 6】

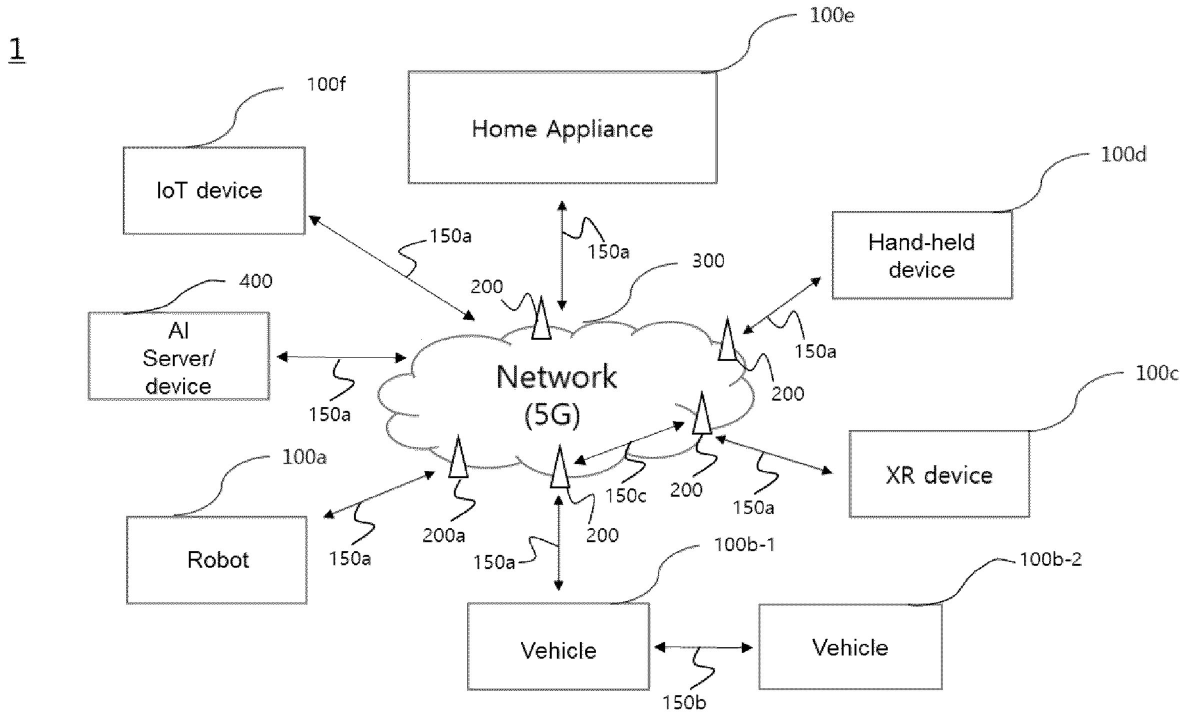
1
100e
Home Appliance
100f
IoT device
100d
Hand-held
device
150a
150a
300
400
200
AI
Server/
device
150a
Network
(5G)
200
150a
100c
100a
150c
200
150a
XR device
Robot
150a
200a
200
150a
100b-1
100b-2
Vehicle
Vehicle
150b

【FIG. 7】

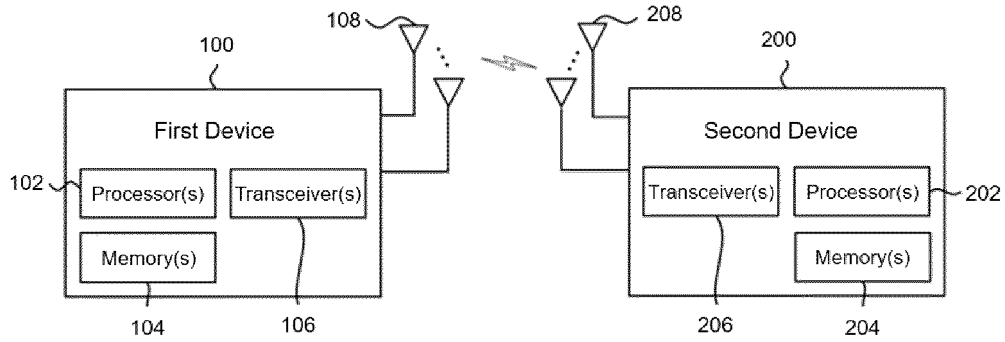


【FIG. 8】

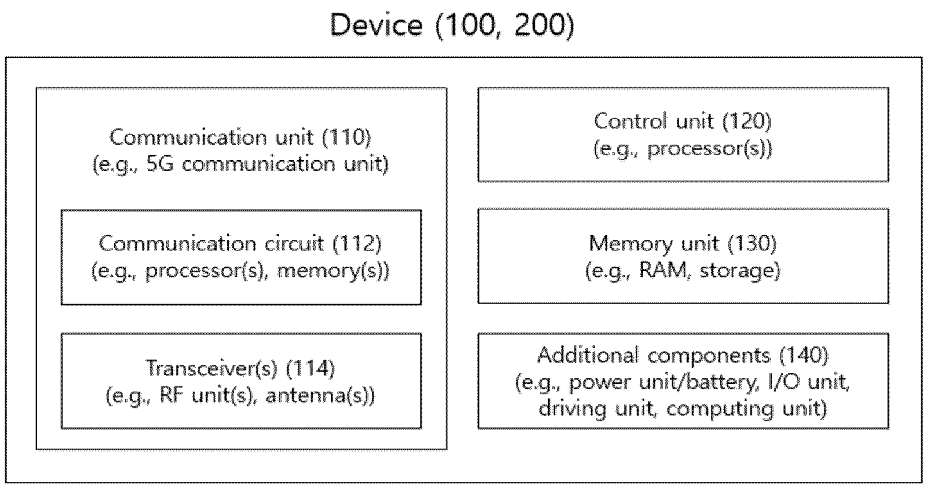


【FIG. 9】

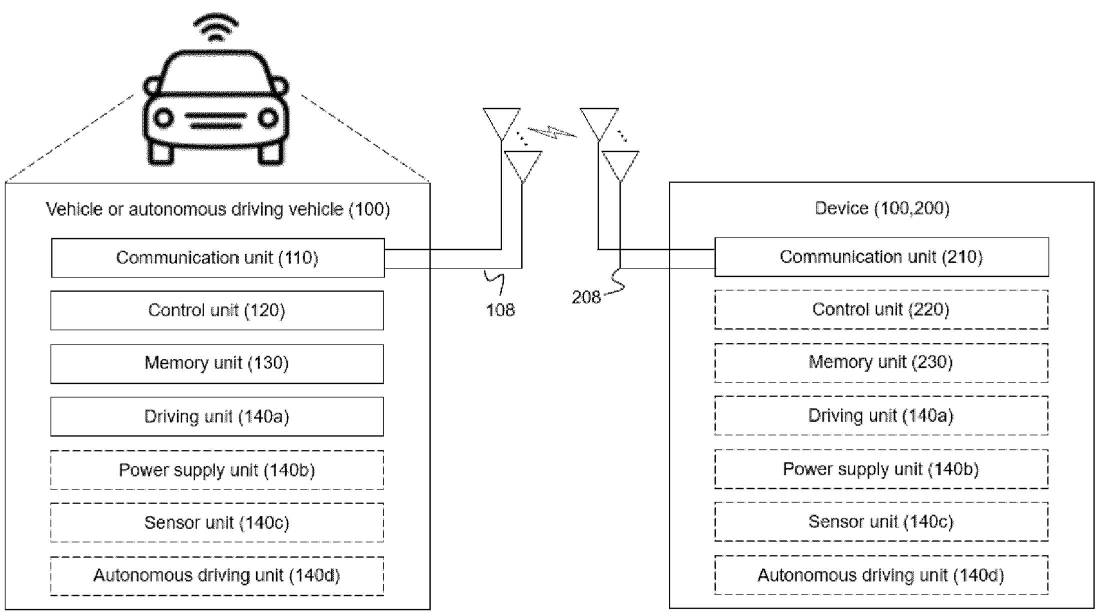

## INTERNATIONAL SEARCH REPORT

International application No. **PCT/KR2023/014819**

**A. CLASSIFICATION OF SUBJECT MATTER**

**H04W 72/23**(2023.01)i; **H04W 72/04**(2009.01)i; **H04W 72/21**(2023.01)i; **H04W 72/12**(2009.01)i; **H04W 8/24**(2009.01)i; **H04L 5/00**(2006.01)i; **H04L 27/26**(2006.01)i

According to International Patent Classification (IPC) or to both national classification and IPC

**B. FIELDS SEARCHED**

Minimum documentation searched (classification system followed by classification symbols)

H04W 72/23(2023.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크 스위칭(uplink switching), 상향링크 대역(uplink band), 시간 간격(time interval), 설정(configuration)

**C. DOCUMENTS CONSIDERED TO BE RELEVANT**

| Category* | Citation of document, with indication, where appropriate, of the relevant passages | Relevant to claim No. |
|---|---|---|
| X<br>Y | HUAWEI et al. Discussion on multi-carrier UL Tx switching. R1-2205863, 3GPP TSG RAN WG1 #110. Toulouse, France. 12 August 2022.<br>See sections 2-3.2; and figures 4-6 and 8-10. | 1-3,5,7-10,12,14-16<br>4,6,11,13 |
| Y | ZTE CORPORATION. Consideration on Rel-18 UL Tx switching capability. R2-2208107, 3GPP TSG RAN WG2 #119 electronic. [Online]. 10 August 2022.<br>See section 2.3; and figures 4 and 7. | 4,11 |
| Y | ERICSSON. Multi-carrier UL Tx switching. R1-2207442, 3GPP TSG RAN WG1 #110. Toulouse, France. 12 August 2022.<br>See section 2. | 6,13 |
| A | MEDIATEK INC. On multi-carrier UL Tx switching scheme. R1-2206986, 3GPP TSG RAN WG1 #110. Toulouse, France. 12 August 2022.<br>See sections 2-3. | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 January 2024** | **11 January 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2023/014819

C. DOCUMENTS CONSIDERED TO BE RELEVANT

| Category* | Citation of document, with indication, where appropriate, of the relevant passages | Relevant to claim No. |
|---|---|---|
| A | WO 2022-150977 A1 (ZTE CORPORATION) 21 July 2022 (2022-07-21) See pages 7-51; and figures 1A-19. | 1-16 |

Form PCT/ISA/210 (second sheet) (July 2022)

**INTERNATIONAL SEARCH REPORT**
**Information on patent family members**

International application No.
**PCT/KR2023/014819**

| Patent document cited in search report | Publication date (day/month/year) | Patent family member(s) | Publication date (day/month/year) |
|---|---|---|---|
| WO 2022-150977 A1 | 21 July 2022 | CN 115699942 A | 03 February 2023 |
| | | US 2023-0046553 A1 | 16 February 2023 |

Form PCT/ISA/210 (patent family annex) (July 2022)